# EUROPEAN PATENT APPLICATION

(11) **EP 2 017 986 A2**
(43) Date of publication of application: **21.01.2009**
(21) Application number: 08153618.7
(22) Date of filing: 28.03.2008
(51) Int. Cl.: H04H 60/25, H04H 60/82

(54) **Method for providing information and broadcast receiving apparatus using the same**

(30) Priority: 16.07.2007 KR 20070071360
(71) Applicant: Samsung Electronics Co., Ltd., Suwon-si, Gyeonggi-do 442-742 (KR)
(72) Inventor: HAN, Kum-yon, 842-1504, Byeokjeokgol 8 danji Apt., Gyeonggi-do (KR)
(74) Representative: Brandon, Paul Laurence

(57) **Abstract**

Provided are an information providing method and a broadcast receiving apparatus using the method. According to the information providing method used by the broadcast receiving apparatus, the broadcast receiving apparatus (100) generates a notification message based on a comparison of currently received information to previously received information. Therefore, the broadcast receiving apparatus may receive information from an external source, to inform a user whether the received information is updated.

## Description

### BACKGROUND OF THE INVENTION

### 1. Field of the Invention

Apparatuses and methods consistent with the present invention relate to providing information received from an external source to a user.

### 2. Description of the Related Art

Televisions (TVs) are generally used as broadcast receiving apparatuses, but modem TVs provide viewers with various additional functions other than displaying broadcast programs.

Among the additional functions now found in TVs is the function to provide additional information such as stock market information, weather reports or traffic reports. This function is commercially used in data broadcasting services.

Such additional information may be displayed on the entire TV screen or on only one portion of the TV screen, but the additional information at least partially covers the TV screen in any case.

Additionally, the additional information may change over time. Accordingly, a user needs to frequently check a window showing the additional information in order to gain new information, which increases user inconvenience.

Furthermore, if a user does not remember the information displayed prior to the new information being shown, even when the additional information changes and is displayed, the user will not notice that the displayed additional information is new.

Moreover, as information sources have diversified with the advent of the information age, there is a need for methods providing a user with additional information using methods other than data broadcasting services.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

Preferred embodiments of the present invention aim to provide a method for informing a user whether information received from an external source by a broadcast receiving apparatus is updated in order to increase the convenience to the user, and a broadcast receiving apparatus using the method.

According to an aspect of the present invention, there is provided an information providing method in a broadcast receiving apparatus, the method comprising receiving information, comparing currently received information to previously received information, and generating a notification message based on a result of the comparing.

If it is determined that the currently received information differs from the previously received information, the generating may comprise generating a notification message to inform a user that the information has been updated.

The comparing may comprise comparing the content, generation time and versions of the currently received information and the previously received information, and determining whether the currently received information differs from the previously received information.

The information may be received according to a Really Simple Syndication (RSS) protocol.

The method may further comprise receiving a broadcast. The receiving of the information may comprise receiving the information through a medium different from a medium by which the broadcast is received.

The receiving of the information may comprise receiving the information via a network.

The network may be the Internet. The broadcast receiving apparatus may function as a web client with respect to a web server which provides the information.

The method may further comprise displaying the generated notification message.

The method may further comprise displaying the currently received information.

According to another aspect of the present invention, there is provided a broadcast receiving apparatus comprising a communication interface which receives information from an external source, and a controller which compares information currently received via the communication interface to information previously received via the communication interface, and generates a notification message based on a result of the comparison by the controller.

If it is determined that the currently received information differs from the previously received information, the controller may generate a notification message to inform a user that the information has been updated.

The controller may compare the content, generation time and version of the currently received information and the previously received information, and may determine whether the currently received information differs from the previously received information.

The communication interface may receive information according to an RSS protocol.

The broadcast receiving apparatus may further comprise a receiver which receives a broadcast. The controller may control the communication interface to receive the information through a medium different from a medium of the receiver by which the broadcast is received.

The communication interface may receive the information via a network.

The network may be the Internet. The broadcast receiving apparatus may function as a web client with respect to a web server which provides the information.

The broadcast receiving apparatus may further comprise an output unit which displays the notification message.

The broadcast receiving apparatus may further comprise an output unit which displays the currently received information.

According to another aspect of the present invention, there is provided a program capable of performing receiving information, comparing currently received information to previously received information, and generating a notification message based on a result of the comparing.

### BRIEF DESCRIPTION OF THE DRAWINGS

The present invention will be more apparent by describing certain exemplary embodiments of the present invention with reference to the accompanying drawings, in which:

FIG. 1 is a diagram showing an RSS system applicable to the present invention;

FIG. 2 is a detailed block diagram showing the DTV of FIG. 1;

FIG. 3 is a flowchart explaining a method for providing information according to an exemplary embodiment of the present invention;

FIG. 4 is a diagram showing an example of a notification message displayed in operation S380 of FIG. 3 according to an exemplary embodiment of the present invention;

FIG. 5 is a block diagram showing a broadcast receiving apparatus according to another exemplary embodiment of the present invention; and

FIG. 6 is a flowchart explaining a method for providing information according to another exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

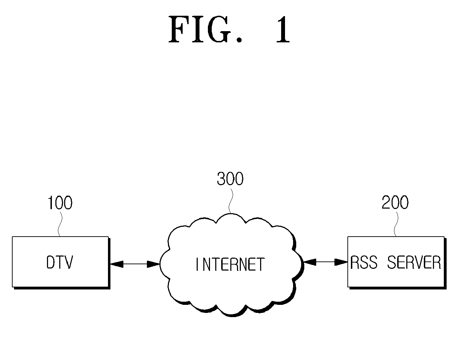

FIG. 1 is a diagram showing an RSS system applicable to the present invention. The RSS system of FIG. 1 is configured by connecting a DTV 100 to an RSS server 200 via the Internet 300 to enable mutual communication.

The DTV 100 is a kind of broadcast receiving apparatus which receives broadcast programs and provides a user with the received broadcast programs. The DTV 100 requests and receives RSS information from the RSS server 200 via the Internet 300. Additionally, the DTV 100 provides the user with the received RSS information using a screen.

Since the DTV 100 requests the RSS information from the RSS server 200 via the Internet 300, the DTV 100 may function as a web client. Alternatively, as the RSS server 200 sends the RSS information to the DTV 100 via the Internet 300, the RSS server 200 may function as a web server.

The DTV 100 may periodically or non-periodically receive the RSS information. In this situation, if it is determined that the RSS information currently being received is updated, the DTV 100 may display on a screen of the DTV 100 a notification message indicating that the RSS information has been updated.

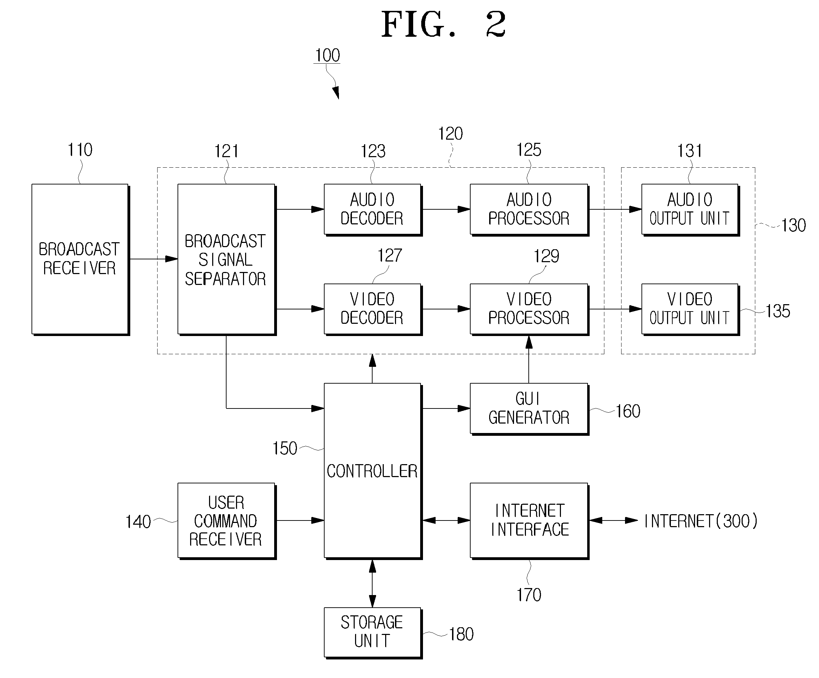

Hereinafter, the DTV 100 of FIG. 1 will be described in detail with reference to FIG. 2. FIG. 2 is a detailed block diagram showing the DTV 100 shown in FIG. 1.

In FIG. 2, the DTV 100 comprises a broadcast receiver 110, a broadcast processor 120, a broadcast output unit 130, a user command receiver 140, a controller 150, a graphical user interface (GUI) generator 160, an Internet interface 170 and a storage unit 180.

The broadcast signal receiver 110 tunes to a broadcast received wirelessly by radio, and demodulates the tuned broadcast.

The broadcast processor 120 performs signal processing with respect to the broadcast signal output from the broadcast signal receiver 110. The broadcast processor 120 comprises a broadcast signal separator 121, an audio decoder 123, an audio processor 125, a video decoder 127 and a video processor 129.

The broadcast signal separator 121 separates the broadcast signal output from the broadcast signal receiver 110 into a video signal, an audio signal and additional data, and outputs the separated signals and data. The audio signal and the video signal separated from the broadcast signal are transferred to the audio decoder 123 and the video decoder 127, respectively, to be used in providing a digital broadcast program.

The additional data separated from the broadcast signal is transferred to the controller 150. The additional data may be program and system information protocol (PSIP) information.

The audio decoder 123 decodes the audio signal output from the broadcast signal separator 121, and may output the decoded audio signal.

The audio processor 125 converts the decoded audio signal output from the audio decoder 123 into an audio signal of a format suitable for playing through a speaker of the DTV 100.

The video decoder 127 decodes the video signal output from the broadcast signal separator 121, so that the decoded video signal can be output.

The video processor 129 converts the decoded video signal output from the video decoder 127 into a video signal of a format suitable for displaying on a display of the DTV 100. To achieve this, the video processor 129 performs color signal processing and scaling with respect to the decoded video signal.

The GUI generator 160 generates a GUI to be shown on the display of the DTV 100. The GUI generated by the GUI generator 160 is transferred to the video processor 129, and is then added to video to be shown on the display of the DTV 100.

The broadcast output unit 130 outputs video and audio corresponding to the video signal and the audio signal output from the broadcast processor 120, and thereby provides a user with the video and audio. The broadcast output unit 130 comprises an audio output unit 131 and a video output unit 135.

The audio output unit 131 may output the audio signal transmitted from the audio processor 125 through a speaker connected thereto, or may output the audio signal to an output display (for example, an external TV) which is connected to an external output terminal.

The video output unit 135 may output the video signal transmitted from the video processor 129 through a display connected thereto, or may output the video signal to an output display (for example, an external TV) which is connected to an external output terminal.

The Internet interface 170 is connected to the RSS server 200 via the Internet 300 so that mutual communication may be performed therebetween.

The storage unit 180 stores a program, data and information which are required when the controller 150 controls the operations of the DTV 100.

The user command receiver 140 transfers user commands received from a remote controller to the controller 150. The controller 150 controls the entire operation of the DTV 100 in response to user commands received from the user command receiver 140. Specifically, the controller 150 controls the broadcast receiver 110, the broadcast processor 120 and the broadcast output unit 130 so that a broadcast can be received in response to a user command and displayed on a screen of the DTV 100.

The controller 150 requests information from the RSS server 200, receives the information via the Internet interface 170, and stores the received information in the storage unit 180. In order to request information from the RSS server 200 via the Internet 300, the controller 150 may function as a web client.

The controller 150 compares the currently received RSS information stored in the storage unit 180 with previously received RSS information that is already stored in the storage unit 180. If it is determined that the currently received RSS information differs from the previously received RSS information, the controller 150 may determine the currently received RSS information to be updated information. Accordingly, the controller 150 may control the GUI generator 160 to generate a message to inform a user that the currently received RSS information is updated information, and to provide the user with the generated message on the screen of the DTV 100.

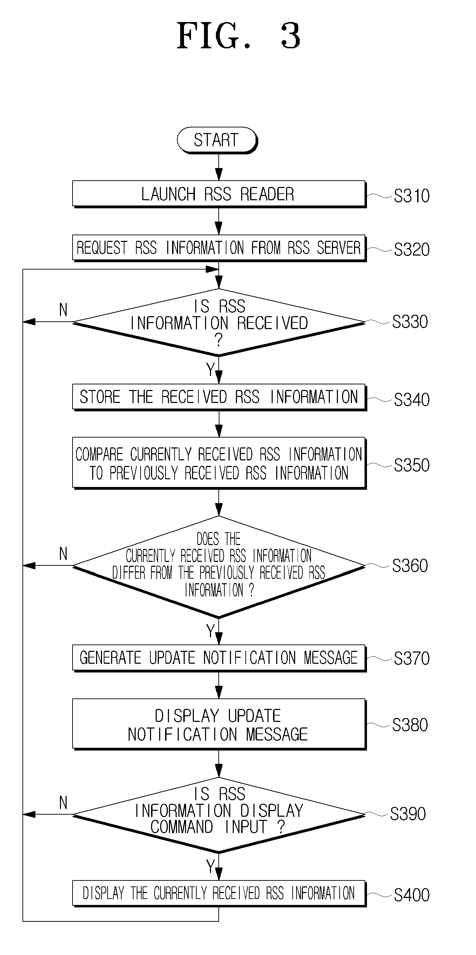

Hereinafter, a process by which the controller 150 informs a user that the RSS information has been updated will be described in detail with reference to FIG. 3. FIG. 3 is a flowchart explaining a method for providing information according to an exemplary embodiment of the present invention.

As shown in FIG. 3, the controller 150 of the DTV 100 launches an RSS reader (S310). The RSS reader is a program used to perform operations S320 to S400. In more detail, the RSS reader may be a program used to request and receive RSS information and to display the received RSS information. The program is used to check whether the RSS information is updated, and to provide a notification message informing a user whether the RSS information is updated.

The controller 150 which launches the RSS reader (hereinafter, referred to as "the controller 150") requests the RSS information from the RSS server 200 through the Internet interface 170 (S320). For example, in operation S320, the controller 150 may request RSS information regarding weather reports. In this situation, the controller 150 may transmit a request message to the RSS server 200, referring to a uniform resource locator (URL) of the RSS server 200, which provides the RSS information regarding weather reports.

Accordingly, the controller 150 receives the RSS information from the RSS server 200 through the Internet interface 170. Here, the RSS information may be received repeatedly, rather than just once. Additionally, the receiving of the RSS information may be repeated periodically or non-periodically.

If the RSS information is received (S330-Y), the controller 150 may store the received RSS information in the storage unit 180 (S340). The controller 150 may compare the RSS information stored in the storage unit 180 with RSS information received subsequently.

The controller 150 then compares the currently received RSS information stored in the storage unit 180 with previously received RSS information that is already stored in the storage unit 180 (S350). The previously received RSS information is received and stored immediately prior to receiving the currently received RSS information.

Specifically, in operation S350, the controller 150 may compare content of the currently received RSS information to content of the previously received RSS information, or may compare the time at which the currently received RSS information is generated to the time at which the previously received RSS information was generated, or may compare the version of the currently received RSS information to the version of the previously received RSS information. Based on the comparison result, the controller 150 may then determine whether the currently received RSS information differs from the previously received RSS information.

If it is determined in operation S360 that the currently received RSS information does not differ from the previously received RSS information (S360-N), this process may be repeated from operation S330.

Alternatively, if it is determined that the currently received RSS information differs from the previously received RSS information (S360-Y), the controller 150 may generate an update notification message (S370). The update notification message refers to a message that informs a user that the RSS information has been updated, that is, to inform a user that the currently received RSS information differs from the previously received RSS information.

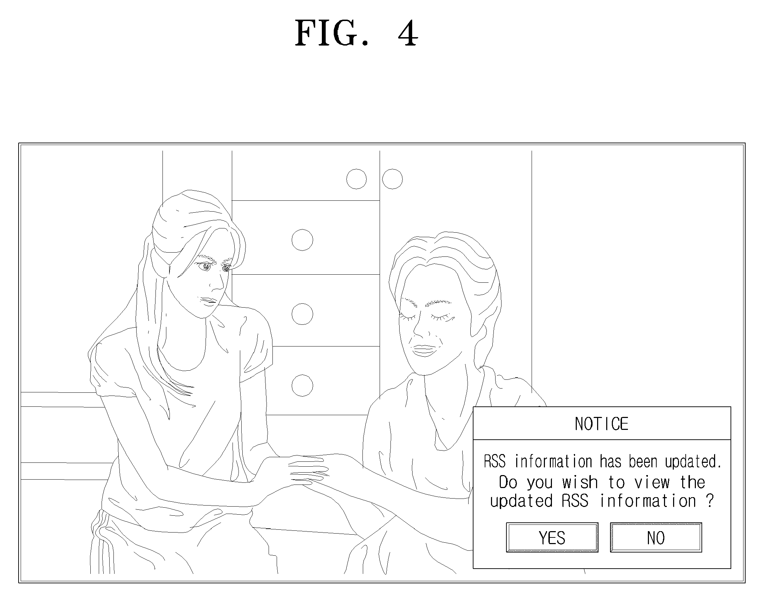

The controller 150 then controls the GUI generator 160 to display the update notification message generated in operation S370 on the screen (S380). FIG. 4 shows an example of the notification message displayed on the screen in operation S380. The notification message of FIG. 4 informs the user that RSS information has been updated.

Additionally, the notification message of FIG. 4 comprises a message asking whether to display the updated RSS information, and items to which the user may respond "YES" or "NO".

If an RSS information display command is input (S390-Y), the controller 150 may control the GUI generator 160 to display the currently received RSS information on the screen (S400). Thereafter, this process may be repeated from operation S330. The RSS information display command may be input by selecting "YES" displayed on the notification message of FIG. 4.

Alternatively, if the RSS information display command is not input (S390-N), this process may be repeated from operation S330 without displaying the currently received RSS information on the screen.

The process of informing the user that the RSS information has been updated was described above in detail, according to the exemplary embodiment of the present invention.

Although the RSS information is requested, received, displayed and updated using the RSS protocol in the exemplary embodiment of the present invention, the present invention may employ other protocols instead of the RSS protocol in order to receive various types of information.

Additionally, the user is informed whether or not a single type of RSS information is updated, for example RSS information regarding weather reports, in this exemplary embodiment of the present invention, but it is also possible to inform the user whether multiple types of RSS information are updated.

Furthermore, the RSS information is received via the Internet 300 according to the exemplary embodiment of the present invention, but the RSS information may be received through any medium. Accordingly, the present invention may be applied to situations in which RSS information is received via other networks or received through a medium identical to a medium which receives a broadcast.

The update notification message of FIG. 4 is merely an example to facilitate understanding of the description, and the update notification message may be provided in formats other than the format shown in FIG. 4. For example, the update notification message may be provided without a message requesting confirmation on displaying RSS information on a screen.

In addition, a window for displaying RSS information (hereinafter, referred to as "RSS information window") is not displayed until a user inputs the RSS information display command through the update notification message, for convenience of description. Accordingly, it is also possible to implement the present invention so that the RSS information window is always displayed and an update notification message is displayed every time the RSS information is updated.

Although a broadcast receiving apparatus which is applicable to the present invention is constituted by the DTV 100, in order to facilitate understanding of the present invention, the present invention is applicable to other broadcast receiving apparatuses as well. Besides the DTV 100, other broadcast receiving apparatuses may include a set-top box (STB) or a digital multimedia broadcasting (DMB), or may be any of various portable devices, such as a mobile phone, a navigation device or a personal multimedia player (PMP), having a broadcast receiving function.

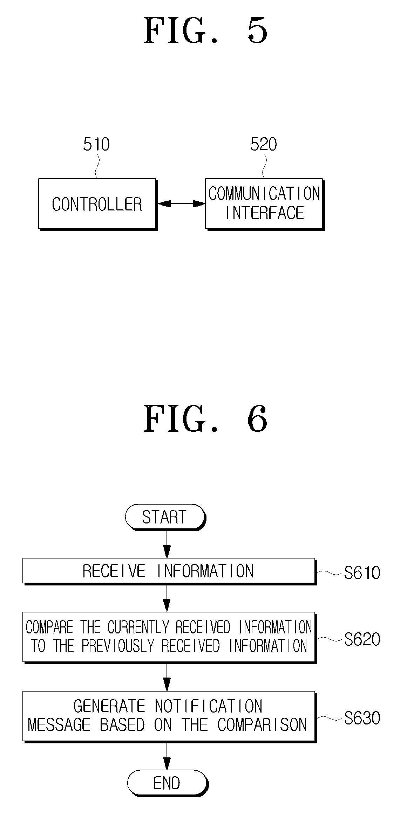

Hereinafter, another exemplary embodiment of the present invention will be described in detail with reference to FIGS. 5 and 6.

As shown in FIG. 5, a broadcast receiving apparatus according to another exemplary embodiment of the present invention comprises a controller 510 and a communication interface 520.

The communication interface 520 receives information from an external source. The controller 510 compares information currently received via the communication interface 520 to information previously received via the communication interface 520, and generates a notification message based on the comparison result.

Referring to FIG. 6, the broadcast receiving apparatus receives information (S610). The broadcast receiving apparatus compares the currently received information to the previously received information (S620), and then generates a notification message based on the comparison (S630).

Therefore, if additional information is updated, it is possible to inform a user that the additional information has been updated.

As described above, according to the exemplary embodiments of the present invention, a broadcast receiving apparatus may receive information from an external source to inform a user whether the received information is updated or not. Accordingly, a window for displaying information does not need to always be displayed on a screen, so the user can view a larger broadcast.

Additionally, there is no need to frequently check an information window in order to check whether new information has been received.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information providing method in a broadcast receiving apparatus (100), the method comprising:
receiving information;
comparing currently received information to previously received information; and
generating a notification message based on a result of the comparing.

2. The method as claimed in claim 1, wherein the generating comprises generating a notification message that the information has been updated, if it is determined that the currently received information differs from the previously received information.

3. The method as claimed in claim 2, wherein the comparing comprises comparing content, generation time and versions of the currently received information and the previously received information, and determining whether the currently received information differs from the previously received information.

4. The method as claimed in any preceding claim, wherein the information is received according to a Really Simple Syndication protocol.

5. The method as claimed in any preceding claim, further comprising receiving a broadcast,
wherein the receiving of the information comprises receiving the information through a medium different from a medium through which the broadcast is received.

6. The method as claimed in any preceding claim, wherein the receiving the information comprises receiving the information via a network.

7. The method as claimed in claim 6, wherein the network is the Internet (300), and
the broadcast receiving apparatus (100) functions as a web client with respect to a web server which provides the information.

8. The method as claimed in any preceding claim, further comprising displaying the generated notification message.

9. The method as claimed in any preceding claim, further comprising displaying the currently received information.

10. A broadcast receiving apparatus (100) comprising:
a communication interface (170) which receives information from an external source; and
a controller (150) which compares information currently received via the communication interface to information previously received via the communication interface, and generates a notification message based on a result of the comparison.

11. The broadcast receiving apparatus (100) as claimed in claim 10, wherein the controller (150) generates a notification message indicating that the information has been updated, if it is determined that the currently received information differs from the previously received information.

12. The broadcast receiving apparatus (100) as claimed in claim 11, wherein the controller (150) compares content, generation time and version of the currently received information and the previously received information, and determines whether the currently received information differs from the previously received information.

13. The broadcast receiving apparatus (100) as claimed in any one of claims 10-12, wherein the communication interface (170) receives information according to a Really Simple Syndication protocol.

14. The broadcast receiving apparatus (100) as claimed in any one of claims 10-13, further comprising a receiver (110) which receives a broadcast,
wherein the controller (150) controls the communication interface to receive the information through a medium different from a medium of the receiver through which the broadcast is received.

15. The broadcast receiving apparatus (150) as claimed in any one of claims 10-14, wherein the communication interface (170) receives the information via a network.

16. The broadcast receiving apparatus (100) as claimed in claim 15, wherein the network is the Internet (300), and
the broadcast receiving apparatus functions as a web client with respect to a web server which provides the information.

17. The broadcast receiving apparatus (100) as claimed in any one of claims 10-16, further comprising an output unit (130) which displays the notification message.

18. The broadcast receiving apparatus (100) as claimed in any one of claims 10-17, further comprising an output unit (130) which displays the currently received information.

19. A recording medium capable of reading from a computer which records a program capable of performing:
receiving information;
comparing currently received information to previously received information; and
generating a notification message based on a result of the comparing.
